Europäisches Patentamt

(19) European Patent Office

Office Européen des brevets

(11) Numéro de publication : **0 251 957 B1**

(12) **FASCICULE DE BREVET EUROPEEN**

(45) Date de publication du fascicule du brevet :
02.01.91 Bulletin 91/01

(51) Int. Cl.⁵ : **B60P 3/34**

(21) Numéro de dépôt : 87430026.2

(22) Date de dépôt : 16.06.87

(54) **Caravanes et autocaravanes, de volume variable, à extension, installation intérieure, stabilisation et repli automatiques.**

(30) Priorité : 17.06.86 FR 8608992

(43) Date de publication de la demande :
07.01.88 Bulletin 88/01

(45) Mention de la délivrance du brevet :
02.01.91 Bulletin 91/01

(84) Etats contractants désignés :
DE ES GB IT

(56) Documents cités :
DE-A- 2 521 999

(56) Documents cités :
DE-B- 1 232 838
FR-A- 949 133
FR-A- 1 089 977
FR-A- 2 102 846
US-A- 3 323 778

(73) Titulaire : Loniewski, Robert Alfred Antoine Marie
40, Avenue Fernandel
F-13012 Marseille (FR)

(72) Inventeur : Loniewski, Robert Alfred Antoine Marie
40, Avenue Fernandel
F-13012 Marseille (FR)

## Description

La présente invention intéresse le secteur des caravanes et autocaravanes de volume variable.

On distingue couramment les cellules pliantes des cellules extensibles . Les premières sont des cellules de dimensions moyennes dont le volume est réduit pour la route et les secondes des cellules qui ont un volume normal sur la route mais sont extensibles pour le séjour.

Mais en fait, il n'y a pas de différence essentielle. Les unes et les autres peuvent se replier et se déployer.

Ces deux types de cellules, en tout cas, ont certainement de l'avenir en raison de tous les avantages que présente la variation de volume.

Mais ni l'industrie, ni même la recherche n'ont atteint, en la matière, les résultats souhaitables.

Les cellules pliantes en dur que l'on trouve actuellement sur le marché présentent encore deux inconvénients graves : leur manque d'automaticité et leur exiguité.

L'emploi, depuis quelques années, de moyens compensateurs (ressorts ou vérins à gaz comprimé) constitue, sans doute un progrès, mais ne fait que réduire très partiellement le temps et les efforts nécessaires et ne remédie pas, en tout cas, aux difficultés que posent la stabilisation et l'installation intérieure.

Quant aux cellules extensibles, elles sont encore relativement rares, et, sauf quelques exceptions, leur accroissement de volume se limite le plus souvent à une simple excroissance.

Faute d'automaticité, leur extension, leur stabilisation et leur installation intérieure appellent au surplus, comme pour les cellules pliantes, du temps et de nombreuses manipulations.

La recherche en ces domaines laisse également à désirer.

Pour les cellules pliantes, la plupart des chercheurs semblent piétiner et arrêtés par le mode de pliage généralement adopté. Ils en restent au système classique consistant dans le déplacement successif et assisté des parties supérieures de chacune des parois, l'agencement intérieur et la stabilisation étant assurés de façon manuelle.

Certains ont sans doute proposé des cellules pliantes composées d'une base fixe et d'un élément mobile coulissant téléscopiquement dans le sens vertical, mais la réduction à ces deux éléments conduit à une hauteur sur route relativement élevée (cf.brevet A. Gaston PAVARD (F.R.) déposé le 27 Juin 1979 FR-A-N°2.459.741).

Un inventeur, M.Clarence BAKER (U.S.A.) (brevet US-A-N°3.323.778 du 6 Juin 1967) a eu l'idée d'une cellule composée de trois éléments s'emboîtant les uns dans les autres, mais n'a pas songé à partir de là pour parvenir à un automatisme total.

En ce qui concerne les cellules extensibles, la recherche est plus diverse.Une certaine convergence apparait cependant.

Depuis de nombreuses années en effet, la plupart des chercheurs marquent leurs préférences pour le système d'extension télescopique et préconisent notamment la réalisation d'une ou deux coques emboîtées dans une coque principale fixée au châssis et susceptibles de s'écarter transversalement pour accroître d'autant la surface habitable. Dès 1954, l'auteur de la présente invention avait obtenu un brevet en ce sens (brevet français FR-A-N°16.752 du 7.10.1954).

Mais les solutions proposées présentent encore de sérieux inconvénients.

Pour mettre au même niveau le plancher principal et les planchers latéraux, constructeurs et chercheurs recourent à des sytèmes compliqués.

Dans la formule qu'il propose (brevet FR-A-N°1.560.843 déposé le 16 AVRIL 1968) Mr.Barthélémy SERVAIS (Belgique) indique ainsi qu'après extension, les planches composant le plancher principal doivent être relevées à l'aide d'une tringlerie et assemblées ensuite à la main.

Dans sa demande de brevet FR-A-N°2.051.739 du 15 JUILLET 1970,Mme MUETHING, cf.SFEDU (D.E.) propose de faire osciller manuellement les planchers latéraux.

M.Roland RIOUT (F.R.) dans sa demande de brevet FR-A-N°2.360.444 du 22 Janvier 1976, propose d'abaisser dans son ensemble chaque coque latérale, et de mettre ainsi les planchers au même niveau. Mais il n'y parvient qu'au prix d'un décalage important des plafonds, et de nombreuses opérations manuelles.

Aucun des systèmes proposés n'assure, non plus, de façon certaine et automatique le parallélisme des mouvements d'extension et de repli au niveau du plancher et du pavillon, ni le verrouillage de l'ensemble.

Autres pierres d'achoppement : la difficulté de mettre en place tous les éléments intérieurs lors de l'extension et du repli et l'impossibilité, le plus souvent, d'habiter la cellule en cours de route.

Le modèle proposé par les Ets.DEPLIREX (FR) brevet FR-A-n°1089 977 du 17 Juin 1953) appelle une série de manoeuvres.

Même ceux qui, comme M.SERVAIS (BE.)M.Charles SCHEIDEL (FR), M.MEGIES (DE.), la Sté APPLIED POWER (U.S.A.) et M.Lucien GUILLOT (FR), envisagent des moyens d'actionnement électriques ou hydrauliques, ne tirent pas de ces moyens tout le profit possible et prévoient encore pour l'extension,le repli le verrouillage, la stabilisation et l'aménagement intérieur une quantité de mouvements à effectuer à la main. (Brevet SCHEIDEL FR-A-N°2383043 du 11 MARS 1977) (brevet MEGIES DE-A- N°2521 999 du 25 Novembre 1976) (Brevet Sté APPLIED POWER du 3 MARS 1978 FR-A-N°2.418.727) (Brevet GUILLOT FR-A- N°949.133 du 28 JUIN 1947). Le document FR-A-949.133 s'accorde avec le préambule de la revendication 1 et 4.

Les cellules à la fois pliantes et extensibles qu'ont proposées certains constructeurs et chercheurs échappent encore moins à la complication (cf.caravane pliante extensible proposée par M.Gaston GRIPON (FR) (brevet FR-A-N°2.557.045 du 6.10.1982).

Le modèle même de cellule autoextensible précédemment proposé par l'auteur de la présente invention et ayant fait l'objet d'un brevet français FR-A-n°2.424.150 du 26.3.1978 et d'un brevet européen EP-A-n°006072, n'évite pas encore tout à fait cet écueil.

La présente invention tent à éluder ces divers inconvénients :

1°– en adoptant pour les pliantes comme pour les extensibles un système télescopique, car un tel système est simple et permet la simultanéité et la rapidité des mouvements.

2°– en utilisant pleinement les possibilités d'automatisme qu'offre la force hydraulique ou électrique pour assurer non seulement l'extension et le repli, mais aussi l'installation intérieure, le verrouillage et la stabilisation.

– Dans ce but, l'invention propose une solution caratérisée comme dans la seconde partie de la revendication 1 et 5.

Une simple pression sur un contact et chacune des opérations peut ainsi s'effectuer de façon entièrement automatique et dans le minimum de temps.

Il convient d'ajouter que les cellules ainsi conçues sont aisément détachables du châssis, et que l'on peut de la sorte rentabiliser son acquisition en utilisant pour des transports le châssis de la caravane ou du camping-car.

Deux versions différentes ont été conçues sur ces bases : une cellule pliante convenant de préférence à un châssis de caravane et une cellule extensible convenant plus particulièrement à un châssis automobile.

La version A (cellule pliante) a une structure télescopique à extension verticale composée de trois éléments, dont deux mobiles susceptibles de coulisser au dessus de l'élément fixe (l'élément intermédiaire étant placé à l'intérieur ou à l'extérieur de celui-ci).

La version B (cellule extensible) a une structure plus classique, soit, deux ensembles latéraux qui, en position de route, sont emboîtés dans la coque principale et qui, pour le séjour, peuvent coulisser transversalement.

Les deux versions comprennent par ailleurs : les moyens d'actionnement électriques ou hydrauliques nécessaires à l'automaticité des mouvements d'extension, de repli et de stabilisation, et un dispositif interne tel que l'extension et le repli s'accompagnent automatiquement de la mise en place de toute l'installation intérieure.

Les deux modèles de cellule proposés sont donc tous deux de volume variable et à structure télescopique et tous leurs éléments sont adaptés et combinés entre eux de façon à assurer, à l'aide d'une commande centrale, non seulement l'extension et le repli comme l'a prévu Mr. GUILLOT (FRA. N°949.133 du 28 juin 1967), mais aussi la mise en place du dispositif intérieur, le verrouillage, la stabilisation et le détachement éventuel de la cellule.

L'extension et le repli du modèle A à structure pliante sont assurés soit par deux vérins hydrauliques télescopiques, soit de préférence par deux vérins à double effet hydrauliques ou électriques, et ce mode d'actionnement est caractérisé par le fait que l'action de chaque vérin est amplifiée par une paire de bras de leviers dont les extrêmités supérieures,munies de galets, soulèvent ou abaissent le pavillon en le maintenant constamment à niveau.

La cellule du modèle A est également caractérisée par le fait que la partie supérieure du bloc cuisine est solidaire de la paroi intermédiaire et s'élève de ce fait à la hauteur voulue, que les deux penderies prévues se mettent en place suivant le même principe, que les cloisons du bloc toilette s'élèvent également du fait de leur solidarité avec le pavillon et qu'ainsi tout le dispositif intérieur se met automatiquement en place en même temps que l'extension et le repli.

La cellule du modèle B est de son côté caractérisée par le fait qu'un vérin agit à la base des ensembles latéraux et l'autre au niveau du pavillon et que l'action de ces vérins est répartie et amplifiée par un jeu de biellettes et par des bras de levier dont les extrêmités exercent une poussée ou une traction sur chacun des ensembles latéraux.

Le modèle B est également caractérisé par le fait que les planchers latéraux sont en position de route,comme après extension, légèrement au dessus du plancher principal et coulissent au dessus de lui, même au niveau des passages de roues,sans recours à la moindre manipulation.

Le modèle B est caractérisé aussi par le fait que les meubles et les cloisons sont pour la plupart solidaires des parois mobiles, et se mettent ainsi automatiquement en place.

Les modèles A et B sont enfin caractérisés par le fait que quatre vérins électriques ou hydrauliques manoeuvrés à partir du tableau de commande, et directement fixés à la cellule elle même, permettent non seulement la stabilisation et la mise à niveau, mais aussi la séparation très rapide de la cellule et du châssis.

Les moyens mis en oeuvre préférentiellement sont illustrés par les figures annexées à la présente description.

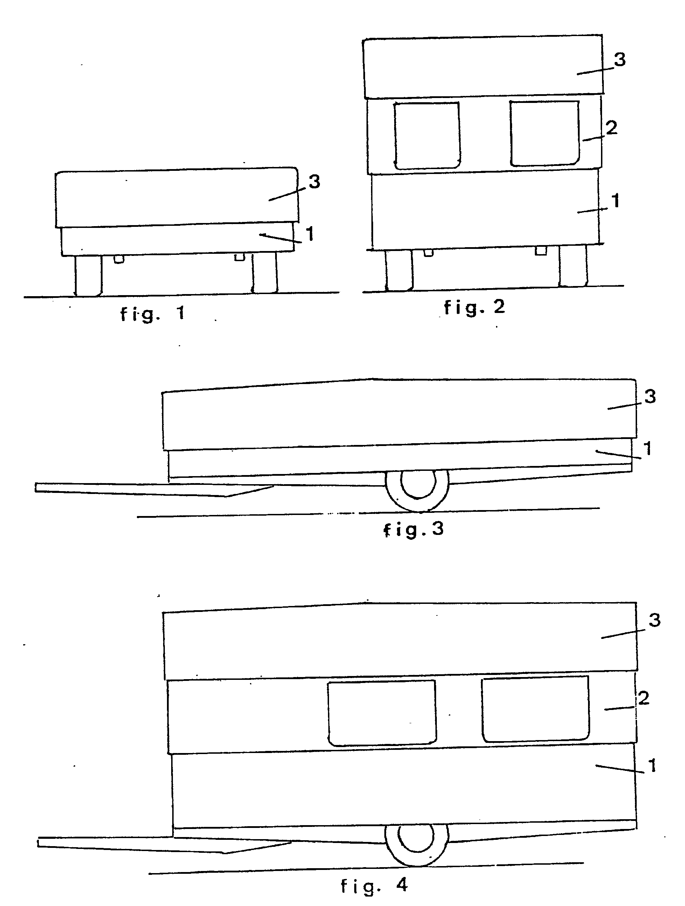

Les figures 1 à 4 (Pl.I/7) représentent, de façon schématique, la première version vue de l'arrière ou sur le côté gauche en position pliée et en position d'extension.

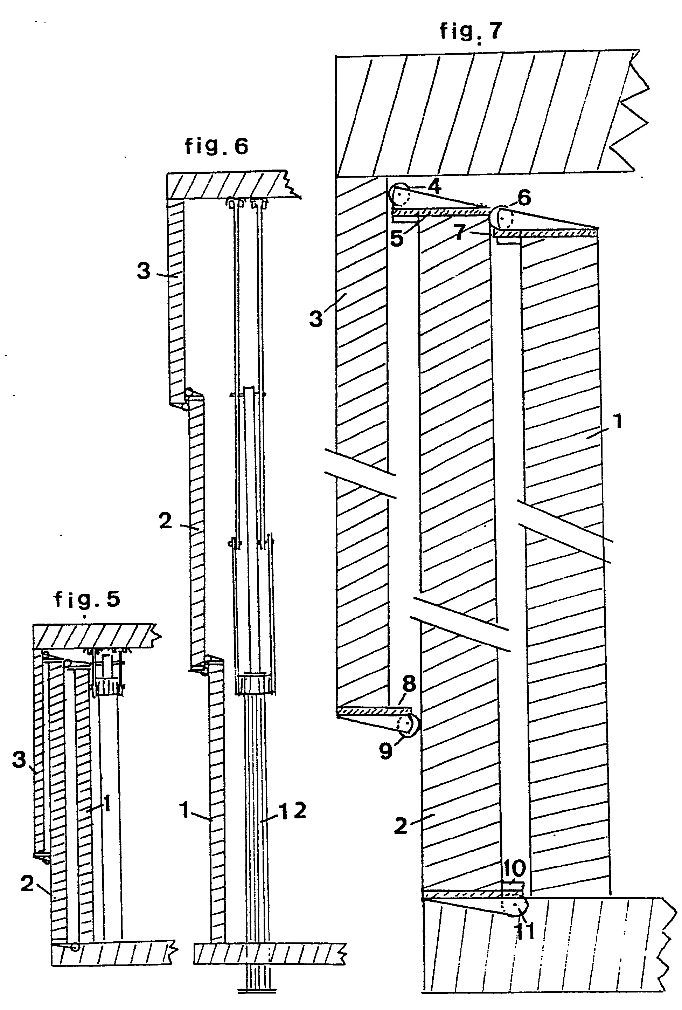

Les figures 5 à 7 (Pl.II/7) représentent dans les deux positions le mode de coulissement des trois éléments qui composent la structure.

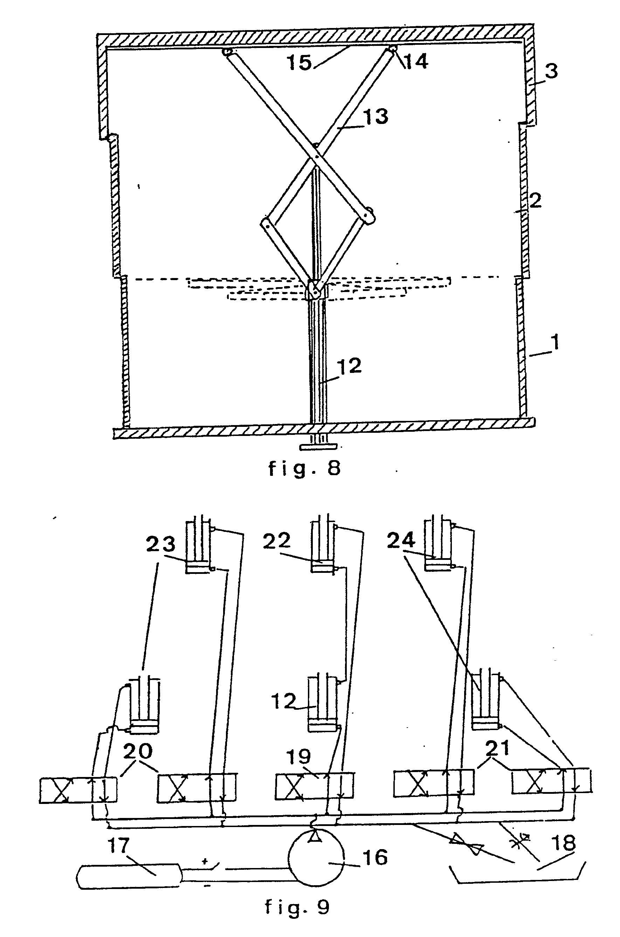

La figure 8 (Pl. III/7) représente l'un des deux vérins agissant à l'avant et à l'arrière de la cellule et assurant à l'aide de ses bras de leviers articulés l'élévation ou l'abaissement du pavillon.

La figure 9 représente le schéma du dispositif hydraulique permettant l'extension et le repli de la cellule ainsi que le verrouillage et la stabilisation.

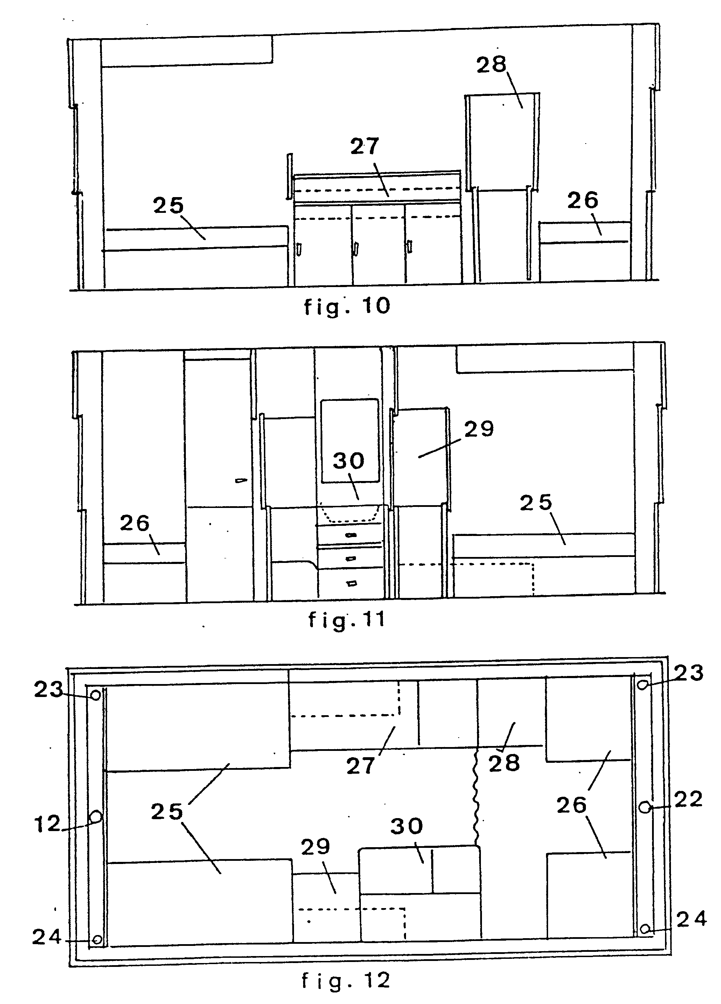

La figure 12 (Pl.IV/7) représente le schéma du dispositif intérieur, et les figures 10 et 11 (Pl.IV/7), en élévation, les côtés cuisine et toilettes.

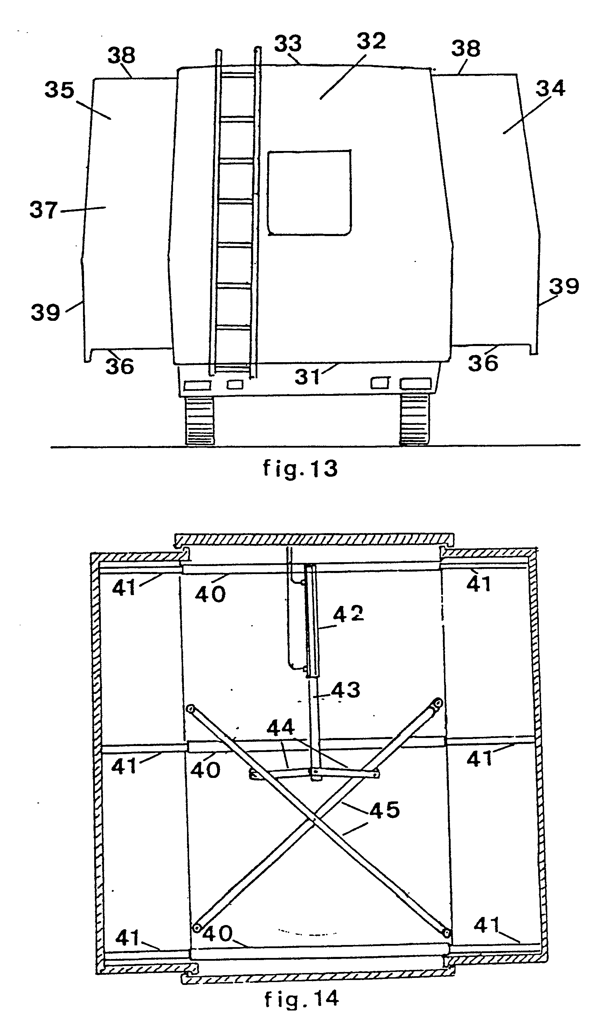

La figure 13 (Pl.V/7) représente de façon schématique la seconde version (cellule extensible) vue de l'arrière en position d'extension, et la figure 14 (Pl.V/7) les moyens d'actionnement au niveau du plancher et du pavillon.

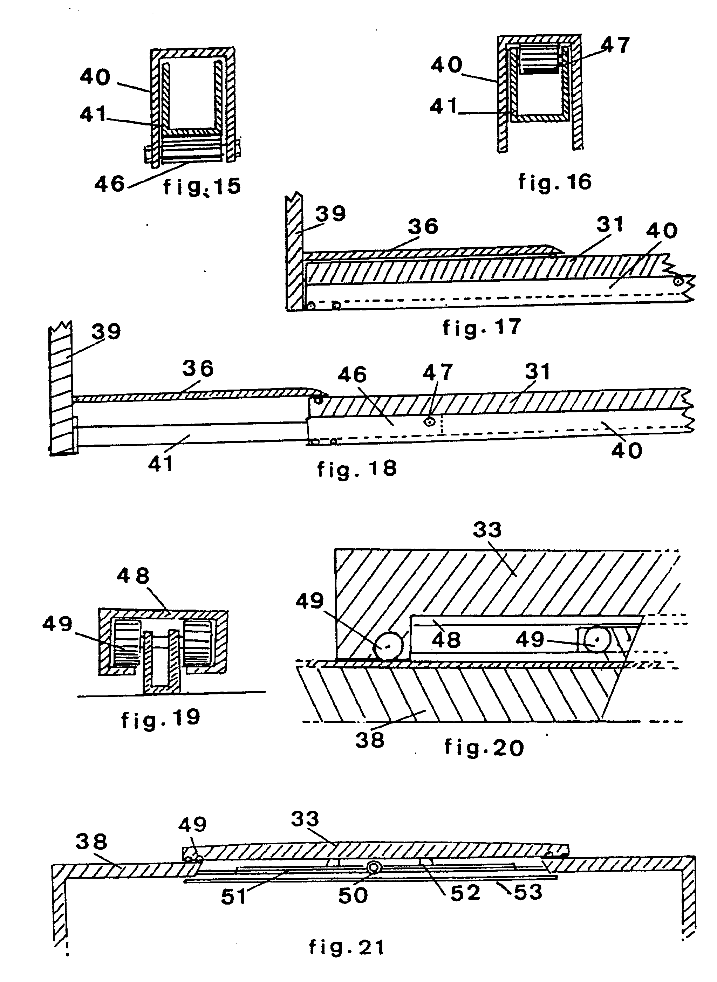

Les figures 15 à 18 (Pl.VI/7) représentent les moyens de coulissement prévus pour l'extension et le repli des planchers latéraux.

Les figures 19 à 21 (Pl.VI/7) représentent le système prévu pour le coulissement des pavillons latéraux.

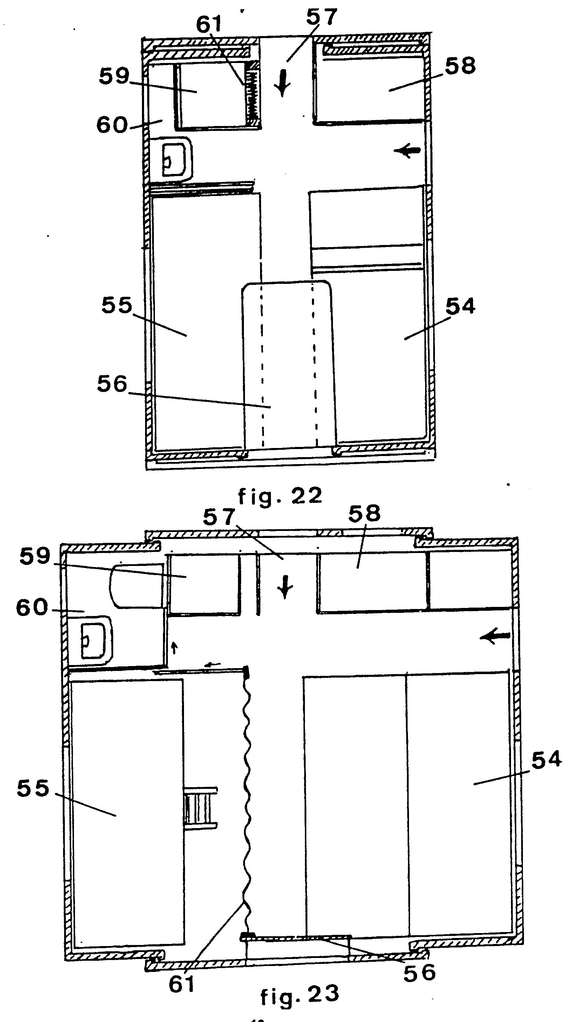

Les figures 22 et 23 (Pl.VII/7) représentent en position de route et en position d'extension le dispositif interne de la seconde version.

La version A (cellule pliante) comprend de façon détaillée :

– une structure télescopique à extension verticale composée de trois éléments :

* un élément fixé au plancher (f. 1 à 4 - 1) de forme rectangulaire et d'une hauteur d'environ 70 cm.

* un élément intermédiaire (f. 2 et 4 - 2), de hauteur semblable placé en position pliée, à l'intérieur du premier et pouvant s'élever au dessus de celui-ci.

* un élément supérieur (f. 1 à 4 : - 3) coiffant les deux autres, composé du pavillon et du haut des parois latérales et pouvant coulisser vers le haut pour donner à la cellule son volume maximum.

– un ensemble de galets (f.7 : 4- 6- 9 et 11) assurant le coulissement régulier des éléments intermédiaire et supérieur et des butées situées sur tout le périmètre de chacun des éléments et dotées de joints d'étanchéité (f.5, 6 et 7 : 5- 7- 8 et 10).

– Deux vérins électriques ou hydrauliques (f.8 : 12) agissant à l'avant et à l'arrière de la cellule et assurant à l'aide de leurs bras de leviers articulés (F.8 : 13) l'élévation ou l'abaissement du pavillon et par là même de tout l'ensemble. Ces bras articulés sont terminés par des galets (f.8 : 14) roulant sous les rails horizontaux fixés au pavillon (f.8 : 15).

– Une centrale hydraulique (si l'on utilise ce mode d'actionnement), comprenant :

* une électro-pompe (f.9 - 16) branchée directement sur l'alternateur de la tractice ou sur une batterie auxiliaire (f.9 - 17) alimentée par l'alternateur.

* un réservoir d'huile (f.9 - 18)

* un distributeur (f.9 - 19. 20 et 21) de préférence à commande électrique.

– Quatre vérins supplémentaires (f.9 - 23 et 24) permettant d'assurer la stabilisation et la mise à niveau de la cellule, ainsi que le détachement du châssis.

– Un dispositif intérieur comprenant, à titre d'exemple, deux lits-dînettes (f. 10 à 12 - 25) ; du côté gauche une penderie (f.10 et 12 - 28), un bloc-cuisine (f.10 et 12) – 27 et 27 bis) et du côté opposé : une deuxième penderie (f. 11 et 12 . 29) et un bloc-toilettes (f. 11 et 12 - 30).

La version B (cellule extensible) comprend :

– Une coque principale (f.13), fixée au chassis par des boulons et comprenant : un plancher (f.13 - 31) des parois verticales avant et arrière (f.13 - 32) et un pavillon (f.13 - 33)

– Deux ensembles latéraux (f.13- 34 et 35) pouvant coulisser transversalement comprenant chacun : un plancher mobile (f.13-36), une face avant, une face arrière, un pavillon (f.13 -38) et une grande face latérale (f.13. 39).

– Les guides ou les profilés mobiles (f.14- 17 et 18- 40 et41) ainsi que les galets (f.15 à 18 - 46 et 47)per-

4

mettant le coulissement à la base des ensembles latéraux.

– les guides (f.20- 48) et galets (f.20- 49) permettant le coulissement des pavillons latéraux (f.20 et 21 - 38).

– deux vérins à double effet électriques ou hydrauliques (f. 14 - 42 et f.21 - 50) assurant à l'aide de leurs bras de leviers (f.14 - 44 et 45)(f.21- 51) le déploiement ou le repli des ensembles latéraux, l'un sous le plancher, et l'autre sous le pavillon.

– Un dispositif intérieur dont les éléments sont automatiquement mis en place et comprenant notamment dans l'exemple choisi : un première chambre avec un grand lit de 1m,40, (f.23- 54), une deuxième chambre avec deux lits superposés (f.23- 55), un bloc toilettes (f.23 - 60) un bloc-cuisine (f.23- 58)une penderie (f.23- 59) et une table (f.23-56)

– une centrale hydraulique semblable à celle de la version A

– des verins supplémentaires pour la stabilisation et le détachement du châssis.

Le modèle A (cellule pliante) fonctionne de la façon suivante :

A l'arrêt,la cellule est automatiquement stabilisée grâce aux vérins prévus à cet effet (f.9 - 23 et 24) Avec un distributeur électro-magnétique, il suffit d'appuyer sur les boutons de commande voulus jusqu'à ce que les semelles des vérins prennent appui sur le sol et que la cellule soit à l'horizontale. Des niveaux à eau placés à côté de la centrale hydraulique permettent de s'en assurer.

La cellule une fois stabilisée, il convient d'appuyer sur un autre bouton. Les deux vérins (f.8 et 9- 12 et 22) fonctionnent simultanément et la synchronisation est assurée soit par des réductions de débit appropriées, soit de préférence par un transfert de fluide d'un vérin à l'autre (la cylindrée de 12, côté tige, doit être en ce cas, égale à celle de 22 côté piston).

Sous la poussée de ces deux vérins et des bras articulés en acier qui en amplifient le mouvement (f.8 - 13), l'élément supérieur (f.1 à 4 - 3) s'élève ; puis, sous l'action de sa butée inférieure (f.7 - 8) arrivant au niveau de la butée supérieure (f.7 - 5) de l'élément intermédiaire, élève celui-ci jusqu'à ce que la butée inférieure (f.7- 10) de l'élément intermédiaire parvienne elle-même au niveau de la butée supérieure (f.7- 7) de l'élément de base (f.1 à 4- 1).

Le coulissement régulier de chacun des éléments est assuré par un jeu de galets (f.7 - 4 - 6 - 9 et 11).

Durant cette extension, s'effectue automatiquement la mise en place de tout le dispositif intérieur.

La partie supérieure du bloc cuisine (f.10- 27 bis) est soulevée à la hauteur voulue sous l'action des butées adhérentes à la paroi intermédiaire.

La partie supérieure des penderies solidaire de la paroi intermédiaire s'élève en même temps qu'elle.

Les cloisons intermédiaires et supérieures du bloc-toilette suivent également le même mouvement que les parois intermédiaires et supérieures dont elles sont solidaires.

Ainsi en quelques secondes, s'opèrent automatiquement la stabilisation de la cellule, sa mise à niveau, son extension, son verrouillage et la mise en place de son dispositif intérieur.

Le repli s'effectue également de façon automatique et dans le même temps.

Il en est de même du modèle B (cellule extensible).

Le véhicule étant stabilisé suivant le système précédemment décrit, on appuie sur un contact, et en quelques secondes, sous l'action conjuguée des vérins (f.14- 42 et f.21- 50) et des bras de leviers qui en amplifient le mouvement (f.14- 44 et 45) les deux ensembles latéraux s'écartent transversalement et simultanément.

Les profilés mobiles (f.18- 41) coulissent régulièrement à l'intérieur des guides (f.18- 40) grâce à des galets (f.15 et 16 - 46 et 47) .

Dans le même temps et grâce aussi à l'action conjuguée des galets (f.19- 49), des guides (f.19-48) et des bras de leviers, (f.21- 50 et 51) les deux pavillons latéraux s'écartent transversalement, suivant le même système que celui qui est adopté pour la base (f.14).

Les planchers latéraux (f.17 et 18 - 36), qui, en position de route, se trouvent au dessus du plancher principal, s'écartent transversalement en même temps que les ensembles latéraux avec lesquels ils font corps, et leur mouvement est facilité par des galets.

Du même coup, les cloisons et les meubles qui reposent, en grande partie, sur les planchers latéraux, se trouvent automatiquement en place (f.22 et 23) et dissimulent en même temps le léger décalage des planchers latéraux avec le plancher principal.

Les divans-lits (f.23- 54 et 55) s'écartent et dégagent ainsi le living-room. Les toilettes (f.23- 60) prennent en même temps leur volume normal.

Il suffit, pour la nuit, de tirer le rideau mobile (f. 22 et 23- 61) replié durant le jour à côté de la penderie et d'obtenir ainsi deux chambres distinctes dotées de lits tout faits. Dans la grande chambre, le lit supérieur est placé à côté et au niveau du lit inférieur et, dans l'autre chambre, le lit supérieur est relevé pour devenir un lit jumelé (mouvement qui peut être assuré manuellement ou automatiquement grâce à un système électrique).

Pour la cuisine, il suffit de faire basculer les deux parties du couvercle. Celui de gauche constitue un égouttoir et celui de droite une table de travail.

Le verrouillage des ensembles latéraux, et par là même, l'étanchéité, sont assurés automatiquement par la seule poussée des bras articulés.

Pour le repli, les opérations s'effectuent dans l'ordre inverse et de façon entièrement automatique aussi.

Une fois repliée, la cellule reste habitable. Elle offre, en effet, dans une surface limitée, tout l'agencement indispensable (v.f.23) : les divans-lits, une table, un bloc-cuisine, une penderie, le lavabo, et des volumes de rangement.Un passage (f.22 et 23 - 57) permet l'accès à la cabine.

On peut également disposer en cours de route de deux places supplémentaires à l'intérieur de la cellule elle-même. Il suffit de faire osciller vers l'avant une partie du dossier mobile du divan-lit de droite.

Les deux versions proposées offrent, au surplus, une possibilité intéressante : la faculté de détacher automatiquement et en quelques instants, la cellule de son châssis et de disposer ainsi de deux éléments: une caravane ou un camping-car et un véhicule utilitaire : soit un châssis de caravane pouvant servir au transport d'un bateau ou de matériaux divers, soit un châssis automobile qui, muni d'un plateau, peut être également utilisé pour le transport.

Il suffit de dévisser les quelques écrous qui lient la cellule au châssis et d'appuyer sur les contacts prévus pour la stabilisation de façon à ce que les tiges des vérins s'élèvent complètement et dégagent ainsi la cellule.

On peut noter, en terminant, quelques chiffres intéressants, pour chacune des deux versions spécialement étudiées :

|  | Version A (pliante) | Version B (extensible) |
|---|---|---|
| Longueur de la caisse | 4m,38 | 3m,IO |
| Largeur hors tout en position pliée | 2m,I8 | Im,94 |
| Largeur hors tout en extension | 2m,I8 | 3m,24 |
| Hauteur sur route en position pliée | 1m,18 | 2m,40 |
| Hauteur sur route en extension | 2m,27 | 2m,40 |
| Hauteur intérieure | 1m,87 | 1m,88 |
| Poids à vide approximatif (châssis compris) | 800 Kg | 2000 à 2500 Kg |
| P.T.A.C. approximatif    d° | 950 Kg | 2600 à 3100 Kg |

Les deux modèles qui viennent d'être décrits sont évidemment susceptibles de nombreuses variantes présentant tout ou partie des caractéristiques revendiquées par la présente.

On peut, par exemple, concevoir une cellule pliante à extension verticale et télescopique qui ne soit composée que de deux éléments .

On peut aussi concevoir une cellule à extension latérale ne comprenant qu'une coque mobile ou une cellule à extension longitudinale.

Il va de soi également que le dispositif intérieur peut varier en fonction de la longueur ou du but poursuivi. Une cellule présentant certaines caractéristiques des versions A ou B peut notamment servir de cabinet médical, de poste de commandement, de local commercial ou de salon d'exposition.

En ce qui concerne le mode d'actionnement, le système hydraulique peut également laisser place à un système mécanique, pneumatique ou électrique.

On peut aussi prévoir, au moins comme moyen de dépannage, une pompe à main et des modèles meilleur marché non pourvus d'un système de stabilisation automatique.

## Revendications

1) Cellule de volume variable et de structure télescopique destinées, de préférence, à constituer une caravane pliante comprenant :

– des parois divisées en trois tranches parallèles (1, 2, 3), dont deux mobiles, (2, 3), coulissant les unes dans les autres dans le sens vertical : la première (1) fixée au plancher, la deuxième (2) dans une position intermédiaire et la troisième (3) attenante au pavillon (fig.1 à 4)

– un dispositif intérieur comprenant principalement un bloc cuisine (27), un bloc eau (30), des lits (25, 26) et des meubles de rangement (28, 29) (fig. 10 à 12)

– un mode d'actionnement électrique, pneumatique ou hydraulique qui permet le déplacement de ces éléments constitutifs assurant l'extension et le repli soit à l'aide de deux vérins (12, 22) télescopiques, soit de préférence de deux vérins à double effet hydrauliques ou éléctriques, et caractérisé par le fait que l'action de chaque vérin (12, 22) est amplifiée par une paire de bras de leviers (13) qui prennent appui au sommet des vérins et dont les extrémités supérieures munies de galets (14), soulèvent ou abaissent le pavillon en le maintenant constamment à niveau et en conservant un certain écart pour garantir la stabilité (fig. 6 et 8)

2) Cellule selon la revendication 1, caratérisée par le fait que la partie supérieure du bloc cuisine (27) est solidaire de la paroi intermédiaire (2) et s'élève de ce fait à la hauteur voulue et que les deux penderies (28, 29) se mettent en place suivant le même principe (fig. 10 et 11)

3) Cellule selon les revendications 1 et 2, caractérisée par le fait que les cloisons du bloc eau (toilette) (30) s'élève également du fait de leur solidarité avec le pavillon et qu'ainsi tout le dispositif intérieur se met automatiquement en place en même temps que l'extension ou le repli (fig. 10 et 11)

4) Cellule de volume variable et de structure télescopique destinée de préférence à constituer un camping-car et comprenant :

– deux ensembles latéraux (34, 35) qui, emboîtés en position de route, dans la coque principale, peuvent coulisser transversalement (fig. 13 et 14)

– un dispositif intérieur comprenant principalement un bloc cuisine (58), un bloc eau (60), des lits (54, 55) et des meubles de rangement (56, 59) (fig. 23).

– un mode d'actionnement électrique, pneumatique ou hydraulique (fig. 9) assurant l'extension et le repli par le jeu combiné de guides de profilés mobiles (40, 41) et de deux vérins (42, 50) à double effet électriques ou hydrauliques disposés horizontalement, caractérisé par le fait que pour assurer la synchronisation des mouvements, un vérin (42) agit à la base des ensembles latéraux (34, 35) et l'autre au niveau du pavillon (38), et que l'action de ces vérins (42, 50) est répartie et amplifiée par un jeu de biellettes et par des bras de leviers (44, 45, 51, 53) dont les extrémités exercent une poussée ou une traction sur chacun des ensembles latéraux (34, 35) (fig. 14 et 21)

5) Cellule selon la revendication 4, caractérisée par le fait que les planchers latéraux (36), d'épaisseur relativement réduite, sont, en position de route, comme après extension, légèrement au dessus du plancher principal (31) et coulissent au dessus de lui, même au niveau des passages de roues, sans recours à la moindre manipulation (fig. 17 et 18).

6) Cellule selon, les revendications 4 et 5, caractérisée par le fait que les lits (54, 55) reposant sur les planchers latéraux (36), se mettent automatiquement en place lors de l'extension ou du repli, qu'il en est de même du bloc cuisine (58) et du bloc eau (toilette) (60) qui lors de l'extension, prend son volume normal et permet l'utilisation des W.C. (fig. 22 et 23).

7) Cellule selon les revendications 1, 2 et 3 et selon les revendications 4, 5 et 6, caractérisées par le fait que quatre vérins supplémentaires (23, 24) électriques ou hydrauliques, manoeuvrés à partir du tableau de commande, et directement fixés, non au châssis, mais à la cellule elle même, permettent non seulement la stabilisation et la mise à niveau, mais aussi la séparation très rapide de la cellule du châssis (fig. 9)


## Ansprüche

1) Der Körper veränderlichen Rauminhalts und teleskopischer Struktur des Musters A ist das optimale Modell, um einen Klappwohnwagen zu konstruieren, der mit folgendem ausgestattet ist :

– Wände, die in drei parallele Teile geteilt sind, von denen zwei bewegbar sind, und die sich senkrecht ineinanderschieben lassen : das erste Teil ist am Fußboden befestigt, das zweite in einer Zwischenstellung, und das dritte seitlich vom Kuppelbau. (Fig. 1 zu 4)

– eine innere Vorrichtung, die hauptsächlich mit einem Küchenblock, einem Wasserblock, Betten und Schränke ausgestattet ist. (Fig. 10 zu 12)

– Ein elektrisches, pneumatisches oder hydraulisches Aktionssystem. Dieses Aktionssystem versichert das Auseinanderfallen und das Zusammenfallen, entweder mit Hilfe von zwei teleskopischen Winden, oder vorzugsweise mit Hilfe von zwei Winden mit doppelten hydraulischen oder elektrischen Effekt, und es ist, in diesen beiden letzten Fällen, durch die Tatsache gekennzeichnet, daß die Wirkung jeder Winde von einem Paar Hebelarmen verstärkt wird, die sich auf die Spitze der Winden stützen, und deren Oberenden, die mit Rollen versehen sind, den Kuppelbau heben oder senken, indem sie ihn auf einem konstanten Niveau halten, und indem sie einen bestimmten Abstand erhalten, um die Festigkeit zu versichern. (Fig. 6 und 8)

2) Der Körper des Musters A, unter der Bedingung 1, ist durch die Tatsache gekennzeichnet, daß der obere Teil des Küchenblocks am Zwischenteil befestigt ist, und sich bis an eine gewünschte Höhe heben kann ; auch die zwei Kleiderablagen stellen sich nach dem selben Prinzip ein. (Fig. 10 und 11)

3) Der Körper des Musters A, unter den Bedingungen 1 und 2, ist durch die Tatsache gekennzeichnet, daß die Scheidewände des Toilettenblocks sich gleichzeitig beim Auseinanderfallen oder beim Zusammenfallen erheben, weil sie auch am Kuppelbau befestigt sind, und somit stellt sich die ganze innere Vorrichtung automatisch ein. (Fig. 10 und 11)

4) Der Körper veränderlichen Rauminhalts und teleskopischer Struktur des Musters B ist das optimale Modell, um ein Mohnmobil zu konstruieren, der mit folgendem ausgestattet ist :
– Zwei seitliche komplexe, die im Hauptrumpf in Fahrtrichtung eingesetzt sind, und die sich querübereinander schieben können. (Fig. 13 und 14)
– Eine innere Vorrichtung, die hauptsächlich mit einem Küchenblock, einem Wasserblock, Betten und Schränken ausgestattet ist. (Fig. 23)
– Ein elektrisches, pneumatisches, oder hydraulisches Aktionssystem (Fig.9), das das Auseinanderfallen oder das Zusammenfallen durch das Zusammenwirken von Führungsschienen mit beweglichen Profileisen und zwei Winden mit doppelter elektrischer oder hydraulischer Wirkung, die horizontal gestellt sind, sichert. Dieses Aktionssytem ist durch die Tatsache gekennzeichnet, daß, um die Übereinstimmung der Bewegungen zu sichern, eine Winde an der Basis der seitlichen Komplexe und eine andere am Fuße des Kuppelbaus wirkt, und daß die Wirkung dieser Winden durch das Spiel der Reuelstangen und durch die Hebelarme, deren Enden einen Druck oder ein Ziehen auf jeden seitlichen Komplex ausüben, verstärkt wird. (Fig. 14 und 21)

5) Der Körper des Musters B, unter der Bedingung 4, ist durch die Tatsache gekennzeichnet, daß die seitlichen Wände, deren Breite stark reduziert ist, in Fahrtrichtung, wie nach dem Auseinanderfallen, leicht über dem Hauptfußboden sind, und sich automatisch, auch in Höhe der Räder, über ihn schieben. (Fig. 17 und 18)

6) Der Körper des Musters B, unter den Bedingungen 4 und 5, der durch die Tatsache gekennzeichnet ist, daß die Liegen, die an den Wänden befestigt sind, sich während des Auseinanderfallens automatisch aufstellen, das gleiche geschieht gleichzeitig mit dem Küchen- und Toilettenblock, der beim Auseinanderfallen sein normales Volumen annimmt und die Benutzung der Toilette zuläßt. (Fig. 22 und 23)

7) Der Körper des Musters A, unter den Bedingungen 1,2 und 3 und des Musters B, unter den Bedingungen 4,5 und 6 sind durch die Tatsache gekennzeichnet, daß vier elektrische oder hydraulische Winden, die von dem Schaltbrett aus arbeiten, nicht an der Chassis, sordem direkt am körper selbst befestigt sind, nicht nur die Stabilität und die Höhenregulierung, sondern auch die sehr schnelle Trennung von Körper und Chassis gewährleisten.(Fig.9)

**Claims**

1) The variable volume body and telescopic structure of design A is the optimum design to make a foldable caravan, comprising the following :
– The sides are divided into three parllel brackets, two of which are moveable, sliding vertically into one another. The first bracket is fixed to the floor, the second is in an intermediate position and the third is joined to the roof. (Fig. 1 to 4)
– An inner mechanism comprising a kitchen unit, a water unit, beds and storage units.(Fig. 10 to 12)
– An electrical, pneumatic or hydraulic mechanism.
This mechanism enables the extension or refold of the caravan by either two telescopic jacks or preferably two double acting electronic or hydraulic jacks ; and is characterised in the last two cases by the fact that the action of each jack is amplified by a pair of levers which rest on top of the jacks, and whose outer extremities are provided with rollers to lift up or push down the roof whilst maintaining it constantly horizontal, the spacing of the rollers ensuring adequate stability. (Fig. 6 to 8)

2) The body of design A, according to specification 1 is characterised by the fact that the outer part of the kitchen unit stands together with the intermediary side and thus lifts itself up to the desired height also by the fact that both cupboards position themselves using the same principle. (Fig. 10 and 11)

3) The body of design A, according to specifications 1 and 2 is characterised by the fact that the partitions of the toilet unit also lift themselves up, since they too are connected to the roof. As a result the whole inner mechanism positions itself automatically and simultaneously during the extension or re-folding processes. (Fig. 10 and 11)

4) The variable volume body and telescopic structure of designB is the optimum design to produce a caravanette and includes the following :
– Two lateral bodies which are fitted together within the main body in an initial position and which are able to slide transversally. (Fig. 13 and 14)
– An inner mechanism primarily including a kitchen unit, a water unit, beds and storage units. (Fig. 23)
– A form of electronic, pneumatic or hydraulic activation (Fig. 9), which enables the extension or re-folding of the caravanette by the combined actions of guides, with moveable profiles, and of two horizontal double-acting electronic or hydraulic jacks.
This mechanism is characterised by the fact that, in order to ensure the synchronisation of the movements, one jack is acting at the base of the lateral bodies and the other at roof level, and the actions of those jacks are distributed and amplified by the action of connecting rods and levers whose extremities exert a pull or pushing force on each of the lateral bodies. (Fig. 14 and 21)

5) The body of design B, according to specification 4, is characterised by the fact that the lateral floors are thinner and are positioned slightly over the main floor both in their initial position and after extension, and they also automatically slide above it and above the wheels in their rollers. (Fig. 17 and 18)

6) The body of design B, according to specifications 4 and 5, is characterised by the fact that the divans which rest on the lateral floors, automatically position themselves during the extension or re-folding and by the fact that the same applies to the kitchen unit, since the latter reaches its normal volume during the extension and permits the use of the W.C. (Fig. 22 and 23)

7) The body of design A, according to specifications 1,2 and 3,and the body of design B, according to specifications 4,5 and 6, are characterised by the fact that four electrical or hydraulic jacks, operated from a control box, are directly fixed to the body itself, instead of the chassis, enabling not only stabilisation and levelling, but also very rapid separation of the body and the chassis. (Fig. 9)

fig. 1

fig. 2

fig. 3

fig. 4

fig. 7

fig. 6

fig. 5

fig. 8

fig. 9

fig. 10

fig. 11

fig. 12

fig.13

fig.14

40

41

46  fig. 15

40

41

47

fig. 16

39  36  31  40

fig. 17

39

36  46  47  31

41  fig. 18  40

48

49

fig. 19

33

49

48  49

38  fig. 20

49  33

38

51  50  52  53

fig. 21

fig. 22

fig. 23